# EUROPÄISCHE PATENTSCHRIFT

(11) **EP 2 276 655 B1**
(45) Veröffentlichungstag und Bekanntmachung des Hinweises auf die Patenterteilung: **27.02.2013**
(21) Anmeldenummer: 09731926.3
(22) Anmeldetag: 10.03.2009
(51) Int. Cl.: B60S 1/38

(54) **GERÄUSCHGEDÄMPFTES WISCHERBLATT EINES SCHEIBENWISCHERS AN EINEM FAHRZEUG**
NOISE-DAMPED WIPER BLADE OF A WINDSHIELD WIPER ON A VEHICLE
BALAI AVEC AMORTISSEMENT SONORE POUR ESSUIE-GLACE D'UN VÉHICULE

(30) Priorität: 14.04.2008 DE 102008018756
(43) Veröffentlichungstag der Anmeldung: 26.01.2011
(73) Patentinhaber: Volkswagen Aktiengesellschaft, 38440 Wolfsburg (DE)
(72) Erfinder: FANGMEIER, Wilhelm, 38442 Wolfsburg (DE)
(86) Internationale Anmeldenummer: PCT/EP2009/001698
(87) Internationale Veröffentlichungsnummer: WO 2009/127299

(56) Entgegenhaltungen:
- EP-A- 0 620 142
- EP-A- 0 743 231
- EP-A- 1 719 672
- DE-A1- 19 609 578
- DE-A1-102004 050 163
- DE-U1-202004 020 356
- US-A- 4 716 618

## Beschreibung

Die Erfindung betrifft ein geräuschgedämpftes Wischerblatt eines Scheibenwischers an einem Fahrzeug, insbesondere ein haltebügelloses/ gelenkfreies Wischerblatt für die Frontscheibe des Fahrzeugs.

Dem aktuellen Entwicklungstrend folgende haltebügellose (Flachbau-) Wischerblätter bestehen im Wesentlichen aus einer langgestreckten gummielastischen Wischleiste, die üblicherweise ein mit seitlichen Längsnuten versehenes Oberteil und ein mit diesem über einen Kippsteg als Umlegehilfe verbundenes Unterteil mit einer Wischlippe aufweist, zwei in den oberen Längsnuten der Wischleiste angeordneten und speziell auf die jeweilige Fahrzeugscheibe abgestimmten und gegenüber dieser konkav gekrümmten Federschienen sowie einem Luftleitelement. Die Federschienen sind mit der Wischleiste über an deren Enden befestigte Endkappen verbunden und tragen etwa in der Mitte ihrer Längserstreckung eine Anschlussvorrichtung zur Anordnung an einem Wischerarm eines Scheibenwischers, über die auch die Übertragung der vom Wischerarm ausgeübten Anpresskraft auf die Wischlippe erfolgt.

Beim Betreiben des Scheibenwischers wird die Wischlippe um den Kippsteg nach der jeweiligen Rückseite des über die Fahrzeugscheibe hin- und herstreichenden Wischerblattes gekippt und am Bewegungs-Umkehrpunkt des Scheibenwischers nach der jeweils anderen Seite umgelegt. Dieses Umlegen oder auch Umschnappen der Wischlippe ist mit einer störenden Geräuschentwicklung verbunden, die insbesondere durch ein Aufschlagen der jeweiligen Längskante des Unterteils auf die über dieser ausgebildete Fläche des Oberteils im Bereich des Kippsteges hervorgerufen wird und einen erhöhten Geräuschpegel im Fahrzeug erzeugt.

Es sind bereits Maßnahmen bekannt geworden, die eine Verhinderung, zumindest jedoch eine Reduzierung der Wischleisten-Geräusche beim Umlegen der Wischlippe bewirken. Zu diesen Maßnahmen zählen beispielsweise die Anordnung von wenigstens einem weichen Polster im Bereich der Kippstelle nach der DE 20 2004 020 356 A10, insbesondere an der Fläche des Oberteils der Wischleiste, gegen die die längserstreckte äußere obere Kante des Unterteils schlägt, die Ausbildung von Dämpfungsstegen in den zwischen dem Oberteil, dem Unterteil und dem Kippsteg gebildeten Längsnuten, wie sie in der DE 10 2005 021 146 A1 und der DE 10 2005 009 205 A1 beschrieben sind, die Anordnung von Dämpfungssträngen zwischen dem Oberteil und dem Unterteil aus einem Material einer wesentlich geringeren Shore-A-Härte als das Material der Wischleiste bei Verzicht auf einen Kippsteg nach der DE 10 2005 045 411 A1 sowie die Anordnung einer Dämpfungsleiste zwischen dem Oberteil und dem Unterteil nach der DE 91 04 461 U1 und die Anordnung einer solchen Dämpfungsleiste in Verbindung mit der Ausbildung eines Deformationsraumes für diese im Oberteil nach der DE 10 2005 053 811 A1.

EP-A-0743231 offenbart den obergriff des Anspruchs 1.

Aufgabe der Erfindung ist es, ein geräuschgedämpftes Wischerblatt eines Scheibenwischers an einem Fahrzeug nach dem Oberbegriff des Anspruchs 1 alternativ so zu gestalten, dass die Geräuschdämpfung und die Wischqualität weiter verbessert sind.

Diese Aufgabe wird bei einem Wischerblatt nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht in einem geräuschgedämpften Wischerblatt, das eine gummielastische Wischleiste mit einem Oberteil zur Halterung an einem gekrümmten federetastischen Träger und einem Unterteil mit einer Wischlippe aufweist, die durch einen Kippsteg voneinander getrennt sind, wobei das Unterteil beidseits des Kippsteges so weit wie das Oberteil nach außen erstreckt ist und die dadurch im Wischleistenprofil gebildeten (Unterteil-) Flügel außenseitig zu Dämpfungsschultern ausgebildet sind. Ein Anschlag des Unterteils bzw. des jeweiligen Flügels mit der Dämpfungsschulter an das Oberteil beim Umlegen der Wischlippe mit dem Unterteil infolge einer Bewegungsumkehr des Wischerblattes erfolgt aufprallweich, da die Dämpfungsschultern den Anschlag aufnehmen, indem diese energieaufnehmend deformiert werden. Auf diese Weise erfolgt eine (Umlege-) Geräuschverhinderung bzw. erhebliche Geräuschreduzierung. Dabei übernimmt das Unterteil der Wischleiste die geräuschdämpfende Funktion. Das wiederum ermöglicht es, das Oberteil niedriger zu gestalten, da dieses keine dämpfende Funktion mehr hat, und den Kippsteg bei Beibehaltung einer geforderten niedrigen Höhe des Wischleistenprofils in Richtung auf das Oberteil zu versetzen. Dadurch wird vorteilhaft das Umlegen des Unterteils über die gesamte Wischleistenlänge erleichtert und verbessert, was sich wiederum in einer Verringerung der Ratterneigung und in einer Erhöhung der Wischqualität auswirkt. Bevorzugt ist das Wischleistenprofil so gestaltet, dass das Unterteil eine Höhe aufweist, die das Zweifache oder im Wesentlichen das Zweifache der Höhe des Oberteils beträgt.

Dabei können die Dämpfungsschultern jeweils den halben Erstreckungsbereich eines Flügels im Wischleistenprofil umfassen und sich in Richtung ihres freien Endes zu erheblich verjüngen, so dass deren Deformierbarkeit nach außen zunimmt. Dadurch wird das aufprallweiche Anschlagen an das Oberteil noch weiter gefördert. Eine weitere Verbesserung der Dämpfungseigenschaften kann erreicht werden, wenn die Dämpfungsschultern aus einem im Vergleich zum Basismaterial der Wischleiste weicheren Kunststoffmaterial hergestellt sind, was durch eine Koextrusion erfolgen kann.

Die Wischleiste kann hinsichtlich ihrer Dämpfungseigenschaften durch die Anordnung von längserstreckten Dämpfungssträngen oder in vorbestimmten Abständen nach außen erstreckten Dämpfungsstegen in den zwischen dem Oberteil, dem Unterteil und dem Kippsteg gebildeten Längsnuten im Bereich zwischen letzterem und der jeweiligen Dämpfungsschulter weiter verbessert werden. Allerdings ist der technologische Aufwand größer, da eine derartige Wischleiste nicht durch Extrudieren als Meterware herstellbar ist, sondern einzeln hergestellt werden muss, beispielsweise durch Spritzgießen. In bekannter Weise nehmen die Dämpfungsstränge und die Dämpfungsstege beim Umlegen des Wischerblattes und der Wischleiste ebenfalls Aufprallenergie auf und wirken einem Aufprall der jeweiligen Dämpfungsschulter des Unterteils auf das Oberteil entgegen. Zudem dienen die Dämpfungsstege einer Übertragung der vom Wischerarm auf das Wischerblatt aufgebrachten Anpresskraft auf die an der Fahrzeugscheibe anliegende Wischlippe, wenn das Unterteil deformiert und die Wischlippe in Schlepplage befindlich ist.

Die Erfindung wird nachfolgend an zwei Ausführungsbeispielen erläutert. In den zugehörigen Zeichnungen zeigen:
- Fig. 1:: ein haltebügelfreies Wischerblatt in einer ersten Ausführung,
- Fig. 2:: einen Schnitt II - II durch dieses,
- Fig. 3:: das Wischerblatt während des Betriebes,
- Fig. 4:: ein haltebügelloses Wischerblatt in einer zweiten Ausführung,
- Fig. 5:: einen Schnitt V - V durch dieses und
- Fig. 6:: dasselbe während des Betriebes.

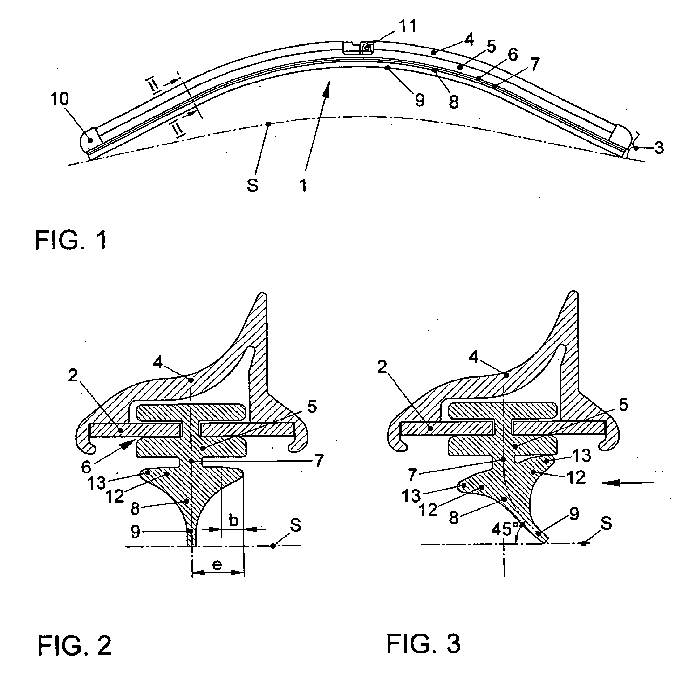

Das in den Fig. 1 bis 3 gezeigte Wischerblatt 1 weist einen aus zwei parallelen und gegenüber einer Fahrzeugscheibe S konkav gekrümmten Federschienen 2 (Fig. 2) gebildeten federelastischen Träger, eine an diesem gehalterte gummielastische und durch Extrusion hergestellte Wischleiste 3, die aus einem mit einem Windleitprofil 4 versehenen Oberteil 5 mit (Aufnahme-) Längsnuten 6 zur Verbindung mit den Federschienen 2 und einem mit dem Oberteil 5 über einen Kippsteg 7 verbundenen Unterteil 8 mit einer Wischlippe 9 zur Anlage an der Fahrzeugscheibe S gebildet ist, Endkappen 10 sowie eine Anschlussvorrichtung 11 zur Anordnung an einem nicht dargestellten Scheibenwischerarm auf.

In Fig. 2 ist zu erkennen, dass das Unterteil 8 beidseits des Kippsteges 7 genau so weit wie das Oberteil 5 nach außen erstreckt ist und Flügel 12 bildet, deren äußerer Bereich zu einer nach ihrem freien Ende zu verjüngten Dämpfungsschulter 13 zur Anlage am Oberteil 5 ausgebildet ist. Diese Dämpfungsschulter 13 hat eine Breite b, die der Hälfte der Erstreckung e a des Flügels 12 nach außen entspricht. Fig. 2 zeigt auch, dass das Oberteil 5 flach gestaltet ist und dass der Kippsteg 7 nahe den Federschienen 2 ausgebildet ist. Die Höhe des Unterteils 8 mit der Wischlippe 9 beträgt das Zweifache der Höhe des Oberteils 5.

Fig. 3 zeigt, dass das Unterteil 8 bei einer Wischbewegung des Wischerblattes 1 in Pfeilrichtung eine Schleppstellung hat, in der die Wischlippe 9 mit der Fahrzeugscheibe S einen (Schlepp-) Winkel von etwa 45° einnimmt. Der, bezogen auf die Bewegungsrichtung, hintere Flügel 12 liegt mit der Dämpfungsschulter 13 im äußeren Bereich des Oberteils 5 an. Bei einer Bewegungsumkehr des Wischerblattes 1 wird die Wischlippe 9 mit dem Unterteil 8 in eine der dargestellten entgegengesetzte Schlepplage umgelegt, wobei der andere Flügel 12 (kleiner Pfeil) des Unterteils 8 mit dessen Dämpfungsschulter 13 am Oberteil 5 anschlägt und zwar aufprallweich, da die Dämpfungsschulter 13 energieaufnehmend deformiert wird.

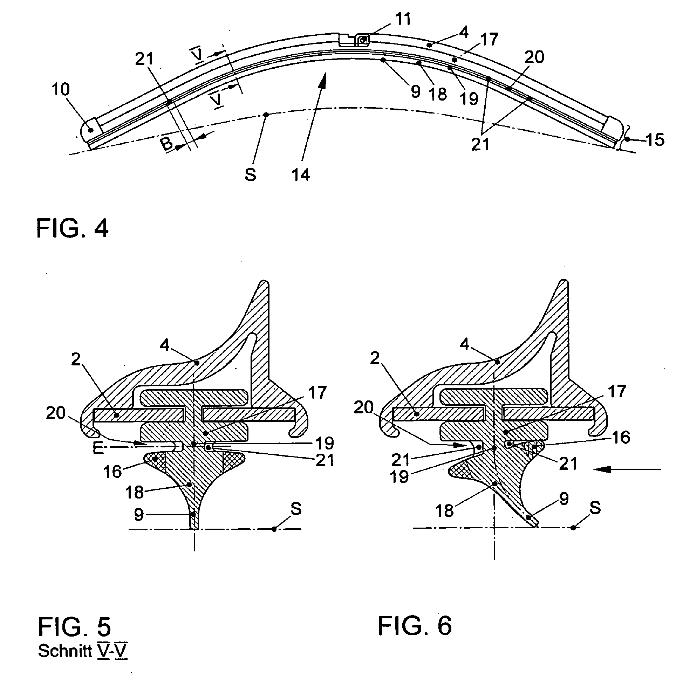

Das in den Fig. 4 bis 6 gezeigte spritzgegossene Wischerblatt 14 weist im Unterschied zu dem vorstehend beschriebenen Wischerblatt 1 an der Wischleiste 15 Dämpfungsschultern 16 (Fig. 5) aus einem Material mit einer wesentlich geringeren Shore-A-Härte als die des Basismaterials der Wischleiste 15 auf, wobei die Dämpfungsschultern 16 im 2-Komponenten-Spritzverfahren stoffschlüssig angeformt sind. Zudem weist die Wischleiste 15 in den zwischen dem Oberteil 17, dem Unterteil 18 und dem Kippsteg 19 gebildeten Längsnuten 20 im Bereich zwischen dem Kippsteg 19 und der jeweiligen Dämpfungsschulter 16 in Abständen von 30 mm nach außen bis etwa zur Mitte dieses Bereiches erstreckte Dämpfungsstege 21 auf, deren Breite B etwa der Dicke des Kippsteges 19 entspricht. In einer Schnittebene E sind die Dämpfungsstege 21 nach außen zu verjüngt und dabei trapezförmig ausgebildet. Die freien Enden der Dämpfungsstege 21 sind zwischen dem Oberteil 17 und dem Unterteil 18 konkav gewölbt. Durch diese Gestaltung verkleinert sich der Querschnitt der Dämpfungsstege 21 vom Kippsteg 19 nach außen zu, so dass deren Dämpfungswirkung nach der Außenseite zu abnimmt.

Fig. 6 zeigt analog zu Fig. 3 das in einer Schlepplage befindliche Wischerblatt 14. Die in der Bewegungsrichtung (Pfeil) hinteren Dämpfungsstege 21 sind elastisch komprimiert, die vorderen elastisch gedehnt, und die in der Bewegungsrichtung hintere Dämpfungsschulter 16 liegt im äußeren Bereich des Oberteils 17 elastisch deformiert an. Bei einer Bewegungsumkehr des Wischerblattes 14 wird die Wischlippe 9 mit dem Unterteil 18 in eine der dargestellten entgegengesetzte Schlepplage umgelegt, wobei die bislang gedehnten Dämpfungsstege 21 energieverzehrend komprimiert werden und dadurch die Aufschlagbewegung und den Anschlag der auf der gleichen Seite befindlichen Dämpfungsschulter 16 dämpfen. Diese schlägt daher gedämpft auf das Oberteil 17 und wird energieverzehrend deformiert, wobei deren weiches Material eine weitere Aufpralldämpfung sicherstellt.

### Bezugszeichenliste

- 1: Wischerblatt
- 2: Federschiene
- 3: Wischleiste
- 4: Windleitprofil
- 5: Oberteil
- 6: Längsnut
- 7: Kippsteg
- 8: Unterteil
- 9: Wischlippe
- 10: Endkappe
- 11: Anschlussvorrichtung
- 12: Flügel
- 13: Dämpfungsschulter
- 14: Wischerblatt
- 15: Wischleiste
- 16: Dämpfungsschulter
- 17: Oberteil
- 18: Unterteil
- 19: Kippsteg
- 20: Längsnut
- 21: Dämpfungssteg
- b: Breite
- B: Breite
- e: Erstreckung
- S: Fahrzeugscheibe

## Patentansprüche

1. Geräuschgedämpftes Wischerblatt eines Scheibenwischers an einem Fahrzeug, mit einer Anschlussvorrichtung zur Anordnung an einem Scheibenwischerarm , mit einem gekrümmten federelastischen Träger, und einer an diesem gehalterten gummielastischen Wischleiste, die ein Oberteil, ein mit diesem über einen Kippsteg verbundenes Unterteil mit einer Wischlippe zur Anlage an einer Fahrzeugscheibe aufweist, wobei das Unterteil (8, 18) beidseits des Kippsteges (7, 19) so weit oder im Wesentlichen so weit wie das Oberteil (5, 17) nach außen erstreckt ist, und wobei die dadurch im Querschnittsprofil der Wischleiste (3, 15) gebildeten Flügel (12) außenseitig zu Dämpfungsschultern (13, 16) ausgebildet sind, die bei einem Anschlag an das Oberteil (5, 17) energieaufnehmend deformiert werden, **dadurch gekennzeichnet, dass** die Dämpfungsschultern (16) zumindest außenseitig aus einem weicheren Material als das Basismaterial der Wischleiste (15) bestehen.

2. Wischerblatt nach Anspruch 1, **dadurch gekennzeichnet, dass** die Dämpfungsschultern (13, 16) jeweils den halben Erstreckungsbereich eines Flügel (12) umfassen.

3. Wischerblatt nach Anspruch 1 oder 2, **dadurch gekennzeichnet, dass** die Dämpfungsschultern (13, 16) nach ihrem freien Ende zu erheblich verjüngt sind.

4. Wischerblatt nach Anspruch 1, **dadurch gekennzeichnet, dass** in den zwischen dem Oberteil (17), dem Unterteil (18) und dem Kippsteg (19) gebildeten Längsnuten (20) im Bereich zwischen dem Kippsteg (19) und der jeweiligen Dämpfungsschulter (16) längserstreckte Dämpfungsstränge oder in vorbestimmten Abständen nach außen erstreckte Dämpfungsstege (21) angeformt sind.

5. Wischerblatt nach Anspruch 4, **dadurch gekennzeichnet, dass** die Dämpfungsstege (21) wenigstens bis zur Mitte des Bereiches zwischen dem Kippsteg (19) und der jeweiligen Dämpfungsschulter (16) erstreckt sind.

6. Wischerblatt nach Anspruch 4, **dadurch gekennzeichnet, dass** die Dämpfungsstege (21) in einer im Bereich des Kippsteges (19) zwischen dem Oberteil (17) und dem Unterteil (18) angeordneten Schnittebene (E) rechteckförmig oder nach außen zu verjüngt, insbesondere trapez- oder dreieckförmig ausgebildet sind.

7. Wischerblatt nach Anspruch 4, 5 oder 6, **dadurch gekennzeichnet, dass** die freien Enden der Dämpfungsstege (21) zwischen dem Oberteil (17) und dem Unterteil (18) konkav gewölbt sind.

8. Wischerblatt nach einem oder mehreren der vorhergehenden Ansprüche, **dadurch gekennzeichnet, dass** das Unterteil (8, 18) eine Höhe aufweist, die das Zweifache oder im Wesentlichen das Zweifache der Höhe des Oberteils (17) beträgt.

## Claims

1. Noise-damped wiper blade of a windscreen wiper on a vehicle, with a connecting device for arranging on a windscreen wiper arm, with a curved, spring-elastic support, and with a rubber-elastic wiper strip which is supported on the latter and has an upper part and a lower part which is connected to the latter via a tilting web and has a wiping lip for contact against a vehicle windscreen, wherein the lower part (8, 18) is extended outwards on both sides of the tilting web (7, 19) as far as, or substantially as far as, the upper part (5, 17), and wherein the wings (12) formed as a result in the cross-sectional profile of the wiper strip (3, 15) are designed on the outer sides to form damping shoulders (13, 16) which are deformed in an energy-absorbing manner upon striking against the upper part (5, 17), **characterized in that** the damping shoulders (16) consist at least on the outer sides of a softer material than the base material of the wiper strip (15).

2. Wiper blade according to Claim 1, **characterized in that** the damping shoulders (13, 16) each comprise half the region of extension of a wing (12).

3. Wiper blade according to Claim 1 or 2, **characterized in that** the damping shoulders (13, 16) are considerably tapered toward the free end thereof.

4. Wiper blade according to Claim 1, **characterized in that** longitudinally extended damping strands or damping webs (21) extended outwards at predetermined distances are integrally formed in the region between the tilting web (19) and the respective damping shoulder (16) in the longitudinal grooves (20) formed between the upper part (17), the lower part (18) and the tilting web (19).

5. Wiper blade according to Claim 4, **characterized in that** the damping webs (21) are extended at least as far as the centre of the region between the tilting web (19) and the respective damping shoulder (16).

6. Wiper blade according to Claim 4, **characterized in that** the damping webs (21) are designed to be rectangular or to be tapered outwards, in particular to be trapezoidal or triangular, in a section plane (E) arranged in the region of the tilting web (19) between the upper part (17) and the lower part (18).

7. Wiper blade according to Claim 4, 5 or 6 **characterized in that** the free ends of the damping webs (21) are curved concavely between the upper part (17) and the lower part (18).

8. Wiper blade according to one or more of the preceding claims, **characterized in that** the lower part (8, 18) has a height which is twice or is substantially twice the height of the upper part (17).

## Revendications

1. Balai d'essuie-glace avec amortissement sonore pour un essuie-glace d'un véhicule, comprenant un dispositif de raccordement pour l'agencement sur un bras d'essuie-glace, comprenant un support élastique à ressort courbé et une raclette de balai d'essuie-glace présentant l'élasticité du caoutchouc maintenue sur celui-ci, laquelle raclette de balai d'essuie-glace comprend une partie supérieure et une partie inférieure qui est reliée à celle-ci par l'intermédiaire d'un élément jointif basculant et qui comprend une lèvre de balai d'essuie-glace pour l'appui contre une vitre de véhicule, la partie inférieure (8, 18) s'étendant vers l'extérieur de part et d'autre de l'élément jointif basculant (7, 19) aussi loin ou essentiellement aussi loin que la partie supérieure (5, 17), et les ailettes (12) ainsi formées dans le profil en section transversale de la raclette de balai d'essuie-glace (3, 15) étant réalisées du côté extérieur de manière à former des épaulements d'amortissement (13, 16) qui, lorsqu'ils viennent buter contre la partie supérieure (5, 17), sont déformés en absorbant de l'énergie, **caractérisé en ce que** les épaulements d'amortissement (16) sont constitués, au moins du côté extérieur, d'un matériau plus souple que le matériau de base de la raclette de balai d'essuie-glace (15).

2. Balai d'essuie-glace selon la revendication 1, **caractérisé en ce que** les épaulements d'amortissement (13, 16) comprennent respectivement la moitié de la zone d'étendue d'une ailette (12).

3. Balai d'essuie-glace selon la revendication 1 ou 2, **caractérisé en ce que** les épaulements d'amortissement (13, 16) sont considérablement amincis en direction de leurs extrémités libres.

4. Balai d'essuie-glace selon la revendication 1, **caractérisé en ce que** des cordons d'amortissement s'étendant longitudinalement ou des éléments jointifs d'amortissement (21) s'étendant vers l'extérieur à des intervalles prédéfinis sont formés dans les rainures longitudinales (20) formées entre la partie supérieure (17), la partie inférieure (18) et l'élément jointif basculant (19), dans la zone entre l'élément jointif basculant (19) et l'épaulement d'amortissement respectif (16).

5. Balai d'essuie-glace selon la revendication 4, **caractérisé en ce que** les éléments jointifs d'amortissement (21) s'étendent au moins jusqu'au centre de la zone entre l'élément jointif basculant (19) et l'épaulement d'amortissement respectif (16).

6. Balai d'essuie-glace selon la revendication 4, **caractérisé en ce que** les éléments jointifs d'amortissement (21) sont réalisés de manière rectangulaire ou de manière amincie en direction de l'extérieur, en particulier de manière trapézoïdale ou triangulaire, dans un plan de coupe (E) disposé dans la zone de l'élément jointif basculant (19) entre la partie supérieure (17) et la partie inférieure (18).

7. Balai d'essuie-glace selon la revendication 4, 5 ou 6, **caractérisé en ce que** les extrémités libres des éléments jointifs d'amortissement (21) entre la partie supérieure (17) et la partie inférieure (18) sont de courbure concave.

8. Balai d'essuie-glace selon l'une ou plusieurs des revendications précédentes, **caractérisé en ce que** la partie inférieure (8, 18) présente une hauteur qui correspond au double ou essentiellement au double de la hauteur de la partie supérieure (17).
